# EUROPEAN PATENT APPLICATION

(11) **EP 4 700 633 A1**
(43) Date of publication of application: **25.02.2026**
(21) Application number: 24195222.5
(22) Date of filing: 19.08.2024
(51) Int. Cl.: G06F 21/75, G06F 21/76

(54) **INTEGRATED CIRCUIT DEVICE, SECURITY MODULE FOR AN INTEGRATED CIRCUIT DEVICE, METHOD OF OPERATING AN INTEGRATED CIRCUIT DEVICE**

(71) Applicant: Siemens Aktiengesellschaft, 80333 München (DE)
(72) Inventor: Ghameshlu, Majid, 1110 Wien (AT); Labs, Torsten, 90461 Nürnberg (DE); Vargas Barroso, Aharón Jesus, 91074 Herzogenaurach (DE)
(74) Representative: Siemens Patent Attorneys

(57) **Abstract**

The invention relates to an integrated circuit device (10) comprising an operation module (12) and a security module (14). The security module (14) comprises a set of voltage domains (20) supplied by different respective supply voltages, each voltage domain (20) comprising a respective domain circuit (22), Each domain circuit (22) comprises a domain logic block (24), configured to provide a domain release signal (30) at a domain output connector (32) of the domain circuit (22), when the register value configuration satisfies a predefined domain release condition. The integrated circuit device (10) comprises a global logic block (42), configured to provide a predefined global release signal (16) at a security module output connector (44) of the security module (14) when the domain release signal (30) configuration satisfies a predefined global release condition.

## Description

The present invention relates to an integrated circuit device, a security module for an integrated circuit device and a method of operating an integrated circuit device.

Over the last years security in embedded systems becomes more and more critical. Application-specific integrated circuits (ASICs) are fundamental parts of embedded systems, and usually target of hackers. There are different fault injection attacks based on electromagnetic impulses or based on clock glitching, to manipulate application-specific integrated circuits.

Security mechanisms built on the ASIC are based on the use of built-in logic to determine whether accesses from outside are permitted or blocked. A result of a security mechanism check in the application-specific integrated circuit is typically stored in a register unit that may be configured as a flip-flop unit. A register value stored in the register unit determines whether accesses from outside into the application-specific integrated circuit are permitted or not. To illustrate, a register value of "0" in the register unit may signify the complete blockade of all external accesses, whereas a register value of "1" indicates the opening of the application-specific integrated circuit to external access. The register value of "1" may therefore be a predefined release value.

A hacker may attempt to manipulate the output of this built-in logic by utilising electromagnetic pulses or laser pulses. The hacker transmits the electromagnetic pulse or the laser pulse to the application-specific integrated circuit, which affects a logic within the application-specific integrated circuit. It is possible that the electromagnetic pulse or the laser pulse may alter the register value stored in the register unit. The register value may be altered from a value of "0" to a value of "1". Consequently, the hacker gains access to the application-specific integrated circuit.

A further type of fault injection attack is the manipulation of the application-specific integrated circuit voltage levels. The application-specific integrated circuit requires input voltages to boot up. By manipulating the level of the input voltage, it is possible to alter the content of the register units.

Application-specific integrated circuits can be protected from laser pulses and electromagnetic pulses using costly processes. For example, application-specific integrated circuit packages can be hardened by adding special materials that block electromagnetic pulses. This prevents these electromagnetic pulses from reaching the internal logic of the application-specific integrated circuit. However, this is very costly.

To protect against voltage level manipulation, voltage level monitors can be built into the ASIC. If these monitors detect a suspicious voltage variation, the Application-specific integrated circuit can be locked. Voltage level monitors are analogue blocks which increase the cost of the Application-specific integrated circuit.

It is an objective of the present invention to provide a cost-efficient solution for protecting an integrated circuit device against tampering attacks based on electromagnetic pulses and voltage level manipulation.

This objective is achieved by the respective subject matter of the independent claims. Further implementations and preferred embodiments are subject matter of the dependent claims.

A first aspect of the present invention relates to an integrated circuit device comprising an operating module and a security module. The integrated circuit device may be configured as an application specific integrated circuit (ASIC).

The operation module may comprise a circuit section of the integrated circuit device configured to perform operations. The security module may comprise a further circuit section of the integrated circuit device. The security module may be configured for rights management in relation to the operations provided by the operation module. The operation module may be configured to block or enable at least one of the operations of the operation module.

The security module comprises a set of voltage domains powered by different respective supply voltages. Each voltage domain comprises a respective domain circuit. In other words, the security module comprises the domain circuits. Each of the domain circuits is supplied by the respective supply voltage of its voltage domain. The supply voltages of the respective voltage domains are different. In other words, the domain circuits are configured to operate at the respective supply voltage, with the supply voltages being different. The domain voltages can be defined for instance by respective predefined voltage ranges, wherein the predefined voltage ranges are different for each voltage domain, i.e. for each domain circuit, and preferably, the respective voltage ranges do not overlap.

Each domain circuit comprises a domain logic block configured to read a register value configuration of a register device of the domain circuit. In other words, each of the domain circuits comprises the corresponding register device. The register device is configured to store one or more of the register values. The register values are stored on respective register units of the register device. The set of register values of the register device forms the register value configuration of the register device.

Each of the domain circuits comprises the respective register device. Therefore, each of the domain circuits is configured to store the respective register value configuration. Each domain circuit comprises the respective domain logic block. The domain logic block is configured to read the register value configuration of the register device of the respective domain circuit. The domain logic block is configured to provide a domain release signal at a domain output connector of the domain circuit when the register value configuration satisfies the predefined domain release condition. In other words, the domain logic block is configured to evaluate whether the register value configuration of the register device satisfies the predefined domain release condition. The predefined domain release condition may require the register value configuration to satisfy a predefined release value configuration. The domain logic block is configured to provide the domain release signal at the domain output connector of the domain circuit if the predefined domain release condition is satisfied.

The integrated circuit device comprises a global logic block. The global logic block is configured to read a domain release signal configuration of the domain output connectors. In other words, the global logic block of the integrated circuit device is connected to the domain output connectors of the respective domain circuits. The integrated circuit device is configured to read the release signals provided at the respective domain output connectors. The domain release signals at the respective domain output connectors forms the domain release signal configuration of the domain output connectors. The global logic block is configured to provide a predefined global release signal at a security module output connector of the security module when the domain release signal configuration satisfies a predefined global release condition. In other words, the global logic block is configured to determine the domain release signal configuration and evaluate whether the domain release signal configuration satisfies the predefined global release condition. The predefined global release condition may require that the respective domain release signal is provided at each of the domain output connectors. The global logic block is configured to provide the predefined global release signal at the security module output connector of the security module if the predefined global release condition is satisfied by the domain release signal configuration.

The operation module is configured to receive the predefined global release signal from the security module output connector of the security module and to release a predefined operation of the operation module as a function of the predefined global release signal. In other words, the operation module is configured to perform the predefined operation of the operation module depending on the provision of the predefined global release signal. The performance of the predefined operation may depend on the provision of the predefined global release signal to the operation module.

The embodiment has the advantage that the provision of the global release signal depends on the register value configuration of different voltage domains. Therefore, in order to manipulate the security module using a supply voltage manipulation to gain unauthorised access to the predefined operation, the attacker must manipulate each of the register devices of the different voltage domains. Manipulation of register devices of different voltage domains is more complicated than manipulation of register devices of the same voltage domain. Therefore, the security of the integrated circuit device is improved.

According to a further embodiment of the present invention, the set of voltage domains comprises three or more of the voltage domains. In other words, the integrated circuit device comprises at least three of the voltage domains supplied by the respective supply voltages. The embodiment has the advantage that an attacker must perform at least three voltage level manipulations for a successful supply voltage manipulation tamper.

According to a further embodiment of the present invention, the register value configuration comprises respective register values of a plurality of register units of the register device. In other words, the register device comprises a plurality of register units. The register device may comprise two or more of the register units. Each of the register units is configured to store the respective register value. The register value configuration may describe the set of register values of the respective register units of the register device. The embodiment has the advantage that the register device is configured to store more than one of the register values. The embodiment has the advantage that an attacker must manipulate a plurality of register units of the register device.

According to a further embodiment of the present invention, the predefined domain release condition requires that each register value of the register value configuration is equal to a predefined release value. In other words, each of the register values must equal the predefined release value. The predefined release value can be configured to release the function. In other words, in order for the domain logic block to provide the respective domain release signal at the respective domain output connector, it is necessary for each register unit of the register device to store the predefined release value.

According to a further embodiment of the present invention, the predefined global release condition requires that at least a predefined portion of the domain output connectors provides the respective predefined domain release signal. In other words, the provision of the global release signal requires that the predefined domain release signal be provided at least at a predefined number of domain output connectors.

According to a further embodiment of the present invention, the predefined global release condition requires that each domain output connector provides the respective predefined domain release signal. In other words, the provision of the global release signal requires that the predefined domain release signal is provided at each of the domain output connectors. It is therefore necessary for each predefined domain release condition to be satisfied by the respective domains. The embodiment has the advantage that the main manipulation of at least one of the register values results in a blocking of the operation.

According to a further embodiment of the invention, the security module comprises a tampering detection device comprising a sensor unit configured to detect a tamper event. The tampering detection device is configured to store a predefined tamper detection value in a tamper register unit of the tamper detection device upon detection of the tamper event. In other words, the tampering detection device comprises the sensor unit and the tamper register unit. The sensor unit may be an electromagnetic sensor unit configured to detect an electromagnetic field. The sensor unit may be configured to detect the tamper event when the electromagnetic field reaches a certain level. The sensor unit is configured to store the predefined tamper detection value in the tamper register unit when the sensor unit detects the tamper event.

The domain logic block of one of the domains is configured to read the tamper register unit and to refuse to provide the domain release signal if the predefined tamper detection value is stored in the tamper register unit. In other words, the respective domain logic block is configured to evaluate whether the register value configuration of the domain is satisfied as the predefined domain release condition and whether the predefined tamper detection value is provided by the tamper register unit. Providing the domain release signal of the respective voltage domain requires that the domain release condition is satisfied and that the predefined tamper detection value is not provided by the tamper register unit. The embodiment has the advantage that even a detected tamper attempt may be used to block the operation module.

According to a further embodiment of the present invention, the security module comprises a security module input connector configured to receive a result value. The result value may be provided by the operation module of the integrated circuit or another source to set an access right of the operation module. The result value may be a signal configured to release or lock the operation. The security model comprises a duplicator module connected to the input connector of the security module and configured to provide duplicate result values of the result value to the domain input connector of each of the voltage domains. In other words, the duplicator module is configured to receive the result value provided at the security module input connector. The duplicator module provides the respective duplicate result value to each domain input connector of the voltage domains. Each domain circuit is configured to set the register value configuration of the register device of the domain circuit as a function of the duplicate result value. It is possible that the duplicate result value is provided to each register unit of the register device to set the predefined release value of the register unit. It may be possible that a specific result value is configured to set the register values of each register unit to the predefined release value. The embodiment has the advantage that the security module provides an interface for setting the register value configurations of the domains.

According to a further embodiment of the present invention, the register units of the register device are separated from each other at different locations of the integrated circuit device. In other words, the register units of the register device are not located in close proximity to each other, but are locally separated. Therefore, it may be necessary to use a plurality of local manipulations rather than a single manipulation to manipulate the register units. For example, it may be necessary to provide a plurality of electromagnetic pulses because one of the electromagnetic pulses may not be sufficient to manipulate each of the register units in a single attempt. The embodiment has the advantage that it is not possible to manipulate all the register units with a single electromagnetic pulse. It is therefore more difficult to manipulate the security module.

A second aspect of the present invention is related to a security module for an integrated circuit device. The integrated circuit device may be configured as an ASIC. The integrated circuit device may comprise an operation module configured to perform an operation and a security module configured to manage access rights to the operation module.

The security module comprises a set of voltage domains supplied by different respective supply voltages, each voltage domain comprising a respective domain circuit. Each domain circuit comprises a domain logic block configured to read a register value configuration of a register device of the domain circuit. The domain logic block is configured to provide a domain release signal at a domain output connector of the domain circuit when the register value configuration satisfies a predefined domain release condition. The integrated circuit device comprises a global logic block configured to read a domain release signal configuration of the domain output connectors. The global logic block is configured to provide a predefined global release signal at a security module output connector of the security module when the domain release signal configuration satisfies a predefined global release condition. The operation module is configured to receive the predefined global release signal of the security module output connector of the security module and to release a predefined operation of the operation module as a function of the predefined global release signal.

A third aspect of the present invention is related to a method of operating an integrated circuit device. The integrated circuit device comprises an operation module and a security module. The security module comprises a set of voltage domains supplied by different respective supply voltages, each voltage domain comprising a respective domain circuit. Each domain circuit comprises a register device and a domain logic block. The method comprises the steps.

A step of reading a register value configuration of a register device of the respective domain circuit by each domain logic block of the respective domain circuits by each domain logic block of the respective domain circuits.

A step of providing by each domain logic block, a domain release signal at a domain output connector of the respective domain circuit when the register value configuration satisfies a predefined domain release condition.

A step of reading, by a global logic block, a domain release signal configuration of the domain output connectors.

A step of providing, by the global logic block, a predefined global release signal at a security module output connector of the security module when the domain release signal configuration satisfies a predefined global release condition.

A step of receiving, by the operation module, the predefined global release signal of the security module output connector of the security module, and releasing a predefined operation of the operation module as a function of the predefined global release signal.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

Independent of the grammatical term usage, individuals with male, female or other gender identities are included within the term.

In the figures,
FIG 1 shows a schematic illustration of an integrated circuits device; and
FIG 2 shows a schematic illustration of a method of operating an integrated circuits device.

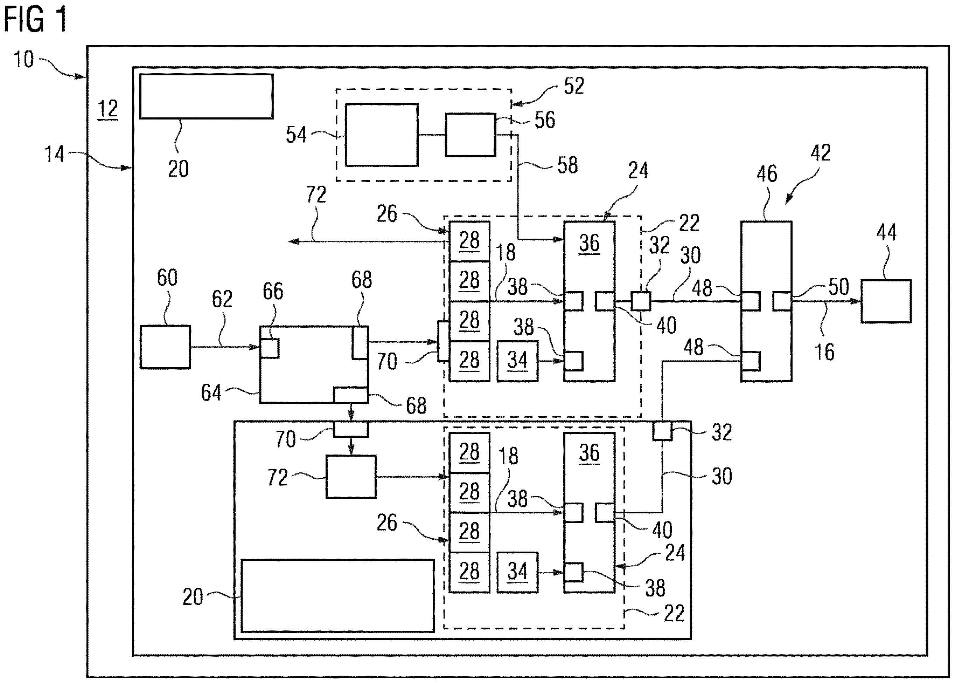

FIG 1 shows a schematic illustration of an integrated circuits device.

The integrated circuit device 10 may comprise an operation module 12 configured to perform predefined operations. Certain operations may be restricted. To release or to lock the respective operations the integrated circuit device 10 comprises a security module 14. The release of the operations may depend on a provision of a predefined global release signal 16 to the operation module 12 by the security module 14. The provision of the predefined global release signal 16 may depend on a register value 18 stored in the security module 14. The security module 14 may be subject to manipulation attempts to gain unauthorised access to the operation.

To protect the security module 14 against tampering attempts based on voltage manipulation, the security module 14 may be configured to operate with different supply voltages. The security module 14 may comprises a set of voltage domains 20 supplied by the different respective supply voltages. Each voltage domain 20 comprises a respective domain circuit 22. The domain circuit 22 is configured to operate at the supply voltage of the respective voltage domain 20. To protect the security module 14 against voltage tampering attacks, each of the voltage domains 20 is involved to detect a possible tampering attempt.

Therefore, each domain circuit 22 comprises a domain logic block 24 and a register device 26. The domain logic block 24 may be configured to read a register value configuration of the register device 26 of the domain circuit 22. The domain register device 26 may comprise a plurality of register units 28. The register units 28 of the register device 26 may be configured as a group of flip-flop units. The register value configuration may comprise register values 18 of each of the register units 28 of the register device 26. The domain logic block 24 of the respective voltage domain 20 is configured to provide a domain release signal 30 at a domain output connector 32 of the domain circuit 22 when the register value configuration satisfies a predefined domain release condition. In other words, the domain logic block 24 is configured to read the current register value configuration of the register device 26 and to verify whether the current register value configuration satisfies the predefined domain release condition. The predefined domain release condition may require that the register value configuration equals a predefined release value configuration. The domain release condition may require that each register value 18 of the register units 28 equals a predefined release value 34. The domain logic block 24 may comprise a comparator device 36. The comparator device 36 may comprise comparator input terminals 38. At one of the comparator input terminals 38 the predefined release value 34 18 may be provided to the comparator device 36. The other comparator input terminals 38 may be connected to the respective register units 28 of the voltage domain 20. The comparator device 36 may comprise a comparator output terminal 40, connected to the domain output connector 32 of the voltage domain 20. The comparator device 36 may be configured to provide the domain release signal 30 at the comparator output terminal 40 when the predefined release value 34 is provided at each of the comparator input terminals 38. The comparator device 36 will not provide the domain release signal 30 if at least one of the comparator input terminals 38 does not have the predefined release value 34. Hence, the register value 18 may be stored in the voltage domains 20 of the different supply voltages. The register value 18 is checked in each of the voltage domains 20. Successful manipulation therefore requires manipulation of the register value 18 in each of the voltage domains 20.

The integrated circuit device 10 may comprises a global logic block 42. The global logic block 42 may be configured to read a domain release signal configuration of the domain output connectors 32. The global logic block 42 may be configured to provide the predefined global release signal 16 at a security module output connector 44 of the security module 14 when the domain release signal configuration satisfies a predefined global release condition. The global release condition may require that the domain release signal configuration equals a predefined domain release signal configuration. It may be possible that each of the domain output connectors 32 must provide the respective domain release signal 30 to satisfy the global release condition. In other words, in order for the global logic block 42 to provide the global release signal 16, it may be necessary for the domain release condition to be satisfied in each of the voltage domains 20.

The operation module 12 may be configured to receive the predefined global release signal 16 of the security module output connector 44 of the security module 14 and to release the predefined operation of the operation module 12 as a function of the predefined global release signal 16. The global logic block 42 may be configured as an AND gate 46. The AND gate 46 may comprise AND gate input terminals 48. Each of the AND gate input terminals 48 may be connected to a respective one of the domain output connectors 32. The AND gate 46 may comprise an AND gate output terminal 50 connected to the security module output connector 44 of the security module 14. The AND gate 46 may be configured to receive the respective domain release signals 30 at the respective AND gate input terminals 48. The global release signal 16 may be provided by the AND gate 46 at the AND gate output terminal 50 when at each of the AND gate input terminals 48 the domain release signal 30 is provided.

To protect the security module 14 against tampering attempts using electromagnetic pulses, the register units 28 may be located in separate locations of the integrated circuit device 10. Manipulation may therefore require the use of a plurality of the electromagnetic pulses to change the register value 18 of each of the register units 28.

As a further protection against tampering attempts using electromagnetic pulses, the security module 14 may comprise a tampering detection device 52. The tampering detection device 52 may comprise a sensor unit 54 and a tamper register unit 56. The sensor unit 54 may be configured to detect a predefined pattern of an electromagnetic field corresponding to an electromagnetic field used to manipulate the register units 28. The detection of the predefined pattern of an electromagnetic field may be defined as a tamper event. The sensor unit 54 may be configured to save a predefined tamper detection value 58 in the tamper register unit 56. The tamper register unit 56 may be configured as a mono flip. The tamper register unit 56 may be connected to the comparator input terminal 38 of one of the comparator devices 36. The predefined tamper detection value 58 may be configured to block the provision of the domain release signal 30 of the comparator device 36.

The security module 14 may comprise a security module input connector 60. The security module input connector 60 may be configured to receive an result value 62. The result value 62 may be configured to release the operation provided by the operation module 12 or to block the operation provided by the operation module 12.

Therefore the register value 18 may be set by providing the respective result value 62 at the security module input connector 60 of the security module 14. The security module 14 may comprise a duplicator module 64 comprising a duplicator input connector 66 connected to the security module 14 input connector. The duplicator module 64 may comprise duplicator output connectors 68 connected to respective domain input connectors 70 of the voltage domains 20. The duplicator module 64 may be configured to receive the result value 62 provided at the security module input connector 60 and to provide duplicate result values 72 of the result value 62 at the duplicator output connectors 68 to provide the duplicate result values 72 to the domain input connectors 70 of the voltage domains 20. In other words, the duplicator module 64 may be configured to receive the result value 62 and to provide the duplicate result values 72 that may be equal to the result value 62 to the respective domain input connectors 70 of the voltage domains 20. The domain circuits 22 of the respective voltage domains 20 may be configured to receive the duplicate result values 72 and to set the register value configuration of the register device 26 of the respective domain circuit 22 as a function of the duplicate result value 72. The domain input connector 70 of the respective voltage domain 20 may be connected to the respective register units 28 of the voltage domain 20. The register values 18 of the respective register units 28 may be set to the same register value 18 of the result value 62.

To summarise, the protection of the ASIC against tampering is increased in three ways.

The register unit 28 that may be designed as a Flip-Flop, containing the register value 18 as a security information is duplicated. In other words, the integrated circuit device 10 may comprise a plurality of the register devices 26, wherein duplicates of the register value 18 are stored in the respective register units 28. The register devices 26 are located in different voltage domains 20 and are thus powered by the different supply voltages of the respective voltage domains 20.

Each of the register devices 26 of the respective voltage domains 20 are involved in the comparison of the register value 18. That means, if at least one of the register devices 26 is manipulated, the ASIC remains locked. To achieve a release of the operation module 12, the hacker must manipulate each of the register devices 26. As the register devices 26 are located in different voltage domains 20, the hacker must manipulate the register devices 26 operated at the different supply voltages. The hacker must therefore manipulate register devices 26 of the two or more supply voltages.

The register units 28 in each voltage domain 20 may be replicated many times. At least 32 bits may be recommended. All registers units 28 may be involved in the comparison of the register value 18. That means, a hacker must use a plurality of electromagnetic pulses to manipulate all register units 28 of each voltage domain 20. This renders the hacking of the ASIC considerably more challenging. A single electromagnetic pulse may affect many of the register units 28 at once. Besides, to avoid that the single electromagnetic pulse may manipulate each of the register units 28 at one time, the redundant register units 28 may be locally spread over the ASIC. The distance between the register units 28 may lead that many electromagnetic pulse may be required to manipulate all of the register units 28.

Furthermore, the tampering detection device, which may comprise the sensor unit 54, may be integrated into the ASIC. In the event of a fault injection attack, such as an electromagnetic pulse or a clock glitching attack, the ASIC may be locked by storing the tamper detection value 58 in the tamper register unit 56, which may be designed as a mono-flop register. The tamper detection value 58 is stored in the tamper register unit 56 until a reset of the integrated circuit device 10 is performed. Consequently, a hacker must trigger the reset of the integrated circuit device 10 after each fault injection attack detected by the tampering detection device 52.

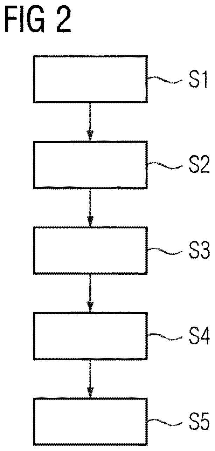

FIG 2 shows a schematic illustration of a method of operating an integrated circuits device.

The method may be carried out by an integrated circuit device 10 shown in Fig. 1. The integrated circuit device 10 may comprise an operation module 12 and a security module 14. The security module 14 may comprise a set of voltage domains 20 supplied by different respective supply voltages. Each voltage domain 20 may comprise a respective domain circuit 22.

The method of operating the integrated circuit device 10 may comprise a register reading step S1 in which the configuration of a register device 26 of the respective domain circuit 22 is read by each domain logic block 24 of the respective domain circuits 22. In other words, in a first step, the domain logic blocks 24 of the respective domain circuits 22 may read the register value configuration of the register device 26 of the respective voltage domain 20. The register device 26 may comprise register units 28. Each register unit 28 may store a corresponding register value 18. The register values 18 of the register units 28 of the voltage domain 20 may form the register value configuration. Therefore, the domain logic block 24 may read each of the register units 28 of the respective register device 26.

In a second step S2, the domain logic block 24 of the respective voltage domain 20 may check whether the register value configuration satisfies the predefined domain release condition. The domain release condition may require that each of the register values 18 of the register units 28 is equal to a predefined release value 34. The domain logic block 24 may provide the domain release signal 30 of the respective voltage domain 20 at a domain output connector 32 of the respective domain circuit 22 if the predefined domain release condition is satisfied.

In a next step S3, a global logic block 42 may read a domain release signal configuration of the domain output connectors 32 of the voltage domains 20. In other words, the global logic block 42 may determine whether the domain release signal 30 is provided at the respective domain output connectors 32.

In a next step S4, the global logic block 42 may provide a predefined global release signal 16 at a security module 14 output connector of the security module 14 if the domain release signal configuration satisfies a predefined global release condition. The predefined global release condition may require the predefined global release signal 16 to be provided at each of the domain output connectors 32.

In a step S5, the operation module 12 may receive the global release signal 16 provided at the security module 14 output connector of the security module 14. Upon receipt of the predefined global release signal 16, the operation module 12 may release a predefined operation of the operation module 12.

In essence, the solution is digital in nature and can be readily migrated to future ASIC versions. Furthermore, the solution is considerably more straightforward to validate than other solutions in accordance with the state of the art.

### List of Reference

- 10: integrated circuit device
- 12: operation module
- 14: security module
- 16: global release signal
- 18: register value
- 20: voltage domain
- 22: domain circuit
- 24: domain logic block
- 26: register device
- 28: register unit
- 30: domain release signal
- 32: domain output connector
- 34: predefined release value
- 36: comparator device
- 38: comparator input terminal
- 40: comparator output terminal
- 42: global logic block
- 44: security module output connector
- 46: AND gate
- 48: and gate input terminal
- 50: and gate output terminal
- 52: tampering detection device
- 54: sensor unit
- 56: tamper register unit
- 58: tamper detection value
- 60: security module input connector
- 62: result value
- 64: duplicator module
- 66: duplicator input connector
- 68: duplicator output connector
- 70: domain input connector
- 72: duplicate result value

## Claims

1. An integrated circuit device (10) comprising an operation module (12) and a security module (14),
**characterised in that**,
- the security module (14) comprises a set of voltage domains (20) supplied by different respective supply voltages, each voltage domain (20) comprising a respective domain circuit (22);
- each domain circuit (22) comprises a domain logic block (24) being configured to read a register value configuration of a register device (26) of the domain circuit (22), wherein the domain logic block (24) is configured to provide a domain release signal (30) at a domain output connector (32) of the domain circuit (22), when the register value configuration satisfies a predefined domain release condition;
- the integrated circuit device (10) comprises a global logic block (42), being configured to read a domain release signal configuration of the domain output connectors (32), wherein the global logic block (42) is configured to provide a predefined global release signal (16) at a security module output connector (44) of the security module (14) when the domain release signal configuration satisfies a predefined global release condition; and
- the operation module (12) is configured to receive the predefined global release signal (16) of the security module output connector (44) of the security module (14), and to release a predefined operation of the operation module (12) as a function of the predefined global release signal (16).

2. The integrated circuit device (10) according to claim 1,
**characterised in that**
the set of voltage domains (20) comprises three or more of the voltage domains (20).

3. The integrated circuit device (10) according to claim 1 or 2,
**characterised in that**
the register value configuration comprises respective register values (18) of a plurality of register units (28) of the register device (26).

4. The integrated circuit device (10) according to any one of the preceding claims,
**characterised in that**
the predefined domain release condition requires that each register value (18) of the register value configuration equals a predefined release value (34).

5. The integrated circuit device (10) according to any one of the preceding claims,
**characterised in that**
the predefined global release condition requires that at least a predefined portion of the domain output connectors (32) provides the respective predefined domain release signal (30).

6. The integrated circuit device (10) according to any one of the claims 1 to 4,
**characterised in that**
the predefined global release condition requires that each domain output connector (32) provides the respective predefined domain release signal (30).

7. The integrated circuit device (10) according to any one of the preceding claims, **characterised in that**
- the security module (14) comprises a tampering detection device (52) comprising a sensor unit (54), configured to detect a predefined tamper event, wherein the tampering detection device (52) is configured to store a predefined tamper detection value (58) in a tamper register unit (56) of the tampering detection device (52) upon detection of the tamper event; and
- the domain logic block (24) of a respective voltage domain (20) is configured to read the tamper register unit (56) and to refuse the provision of the domain release signal (30) when the predefined tamper detection value (58) is stored in the tamper register unit (56).

8. The integrated circuit device (10) according to any one of the preceding claims, **characterised in that**
- the security module (14) comprises a security module input connector (60), configured to receive a predefined result value (62);
- the security module (14) comprises a duplicator module (64), connected to the security module input connector (60) and configured to provide duplicate result values (72) of the result value (62) to domain input connectors (70) of each of the voltage domains (20); and
each domain circuit (22) configured to set the register value configuration of the register device (26) of the domain circuit (22) as a function of the duplicate result value (72).

9. Security module (14) for an integrated circuit device (10),
**characterised in that**
- the security module (14) comprises a set of voltage domains (20) supplied by different respective supply voltages, each voltage domain (20) comprising a respective domain circuit (22);
- each domain circuit (22) comprises a domain logic block (24) being configured to read a register value configuration of a register device (26) of the domain circuit (22), wherein the domain logic block (24) is configured to provide a domain release signal (30) at a domain output connector (32) of the domain circuit (22), when the register value configuration satisfies a predefined domain release condition; and
- the integrated circuit device (10) comprises a global logic block (42), being configured to read a domain release signal configuration of the domain output connectors (32), wherein the global logic block (42) is configured to provide a predefined global release signal (16) at a security module output connector (44) of the security module (14) when the domain release signal configuration satisfies a predefined global release condition.

10. A method of operating an integrated circuit device (10), the integrated circuit device (10) comprising an operation module (12) and a security module (14), the security module (14) comprising a set of voltage domains (20) supplied by different respective supply voltages, each voltage domain (20) comprising a respective domain circuit (22), comprising a register device (26) and a domain logic block (24), the method comprising the steps of:
- reading a register value configuration of a register device (26) of the respective domain circuit (22) by each domain logic block (24) of the respective domain circuits (22) by each domain logic block (24) of the respective domain circuits (22);
- providing by each domain logic block (24), a domain release signal (30) at a domain output connector (32) of the respective domain circuit (22) when the register value configuration satisfies a predefined domain release condition;
- reading, by a global logic block (42), a domain release signal configuration of the domain output connectors (32);
- providing, by the global logic block (42), a predefined global release signal (16) at a security module output connector (44) of the security module (14) when the domain release signal configuration satisfies a predefined global release condition; and
- receiving, by the operation module (12), the predefined global release signal (16) of the security module output connector (44) of the security module (14), and releasing a predefined operation of the operation module (12) as a function of the predefined global release signal (16).
